# EUROPÄISCHE PATENTSCHRIFT

(11) **EP 4 064 937 B1**
(45) Veröffentlichungstag und Bekanntmachung des Hinweises auf die Patenterteilung: **17.07.2024**
(21) Anmeldenummer: 20808469.9
(22) Anmeldetag: 25.11.2020
(51) Int. Cl.: A47B 87/00, A47B 87/02, E04G 7/34, E04G 7/30

(54) **MÖBELBAUSATZ**
FURNITURE KIT
MEUBLE EN KIT

(30) Priorität: 25.11.2019 CH 14842019
(43) Veröffentlichungstag der Anmeldung: 05.10.2022
(73) Patentinhaber: Vitra AG, 4127 Birsfelden (CH)
(72) Erfinder: KELLER, Stefan, 79585 Steinen - Hofen (DE); SCHÜTT, Helmut, 79379 Mülllheim - Hügelheim (DE)
(74) Vertreter: Latscha Schöllhorn Partner AG
(86) Internationale Anmeldenummer: PCT/EP2020/083337
(87) Internationale Veröffentlichungsnummer: WO 2021/105197

(56) Entgegenhaltungen:
- FR-A1- 2 984 430
- US-A- 2 665 950

## Beschreibung

### Technisches Gebiet

Die Erfindung betrifft einen Möbelbausatz mit dem Möbel flexibel auf-, ab und umgebaut werden können.

### Stand der Technik

Zum flexiblen Zusammenstellen von Möbeln sind Systeme bekannt, bei denen sich aus Grundkomponenten variabel Möbel aufbauen lassen. Gerade in Warengeschäften oder in Büros, wo typischerweise die Möblierung beziehungsweise die Anforderungen an die Möblierung von Zeit zu Zeit ändert, sind variable Möbelbausysteme verbreitet.

Oft basieren bekannte variable Möbelbausysteme auf einer dreidimensionalen tragenden Rohrstruktur, die in unterschiedlicher Weise aufgebaut werden kann. Beispielsweise ist in der EP 0 262 090 A1 eine Möbelstruktur beschrieben, die eine Mehrzahl von über Knotenelemente verbindbaren Rohren aufweist. Mittels der Knotenelemente können in diesem System die Rohre in unterschiedlicher Weise zusammengesetzt werden und damit insbesondere Gestelle in unterschiedlichen Formen erstellt werden. Auch können die verbundenen Rohre mit Sichtblenden und Böden ausgestattet werden, die zwischen den Rohren montiert werden. In der US 2,665,950 A ist eine bezüglich Knotenelemente ähnliche Rohrstruktur aus einem anderen Anwendungsgebiet gezeigt.

Unter anderem in modernen Bürolandschaften besteht heutzutage zunehmend ein Bedürfnis danach, die Möblierung oft und umfassend anzupassen. Bekannte Möbelbausysteme sind dabei trotz ihrer Variabilität nachteilig, da sie aufwendig zerlegt und wieder neu aufgebaut werden müssen. Typischerweise wird dieser Umbau von geschulten Personen unter Einsatz von Spezialwerkzeug vorgenommen. Dies ist unter anderem aus Sicherheitsgründen erforderlich, da das Möbelbausystem gewährleisten muss, dass mit ihm erstellte Möbel ausreichend stabil sind. Eine unstabile Möblierung kann eine erhebliche Gefährdung von Personen nach sich ziehen, insbesondere bei vergleichsweise hohen und/oder stark beladenen Möbeln.

Da mit den bekannten Möbelbausystemen ein Auf-, Um- und Abbau von Möbeln wie erwähnt aufwendig ist und bei unsachgemässer Ausführung ein Sicherheitsrisiko stellen kann, wird heutzutage häufig davon abgesehen, die Möblierung bei sich ändernden Bedürfnissen anzupassen. Beispielsweise wird bei offenen Bürolandschaften, in denen es sinnvoll sein könnte, die Möblierung projektweise anzupassen, darauf verzichtet, von der Variabilität der Möbelbausysteme Gebrauch zu machen.

Aufgabe der nachfolgenden Erfindung ist es daher, ein System vorzuschlagen, mit dem auf einfache Weise, quasi werkzeuglos, flexibel Möbel erstellt und umgebaut werden können, die ausreichend robust sind und Sicherheit bieten, dass sie beispielsweise für Büros oder Verkaufsgeschäfte geeignet sind. Insbesondere soll das System ermöglichen, Gestelle und Arbeitstische flexibel, effizient und sicher auf-, um-und abzubauen.

### Darstellung der Erfindung

Die Aufgabe wird erfindungsgemäss durch einen Möbelbausatz gelöst, wie er im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Ein Möbelbausatz weist einen Satz Bodenleitern, einen Satz längsförmiger Traversen und einen Satz längsförmiger Windverbände auf. Der Möbelbausatz kann dazu vorgesehen sein, dass nach Bedarf flexibel unterschiedliche Möbel aus den gleichen Bauteilen aufgebaut werden können. Dabei können solche Möbel beispielsweise Regale, Gestelle oder Tische sein. Insbesondere können die Möbel Büromöbel sein.

Der Begriff "Möbel" im Zusammenhang mit der Erfindung bezieht sich auf Einrichtungsgegenstände vorwiegend in Innenräumen wie Wohnungen, Geschäften, Büroräumen oder anderen Nutzungseinheiten. Typischerweise sind Möble beweglich und stehen somit im Gegensatz zu unbeweglichen Gegenständen (Immobilien), die mit dem Boden oder baulichen Anlagen fest verbunden sind. In den meisten Fällen haben Möbel einen vorbestimmten Zweck und sind für eine bestimmte Nutzung vorgesehen. Typische Möbel können Tische, Stühle, Regale, Ablagen und dergleichen sein.

Der Begriff "Satz" im Zusammenhang mit dem Möbelbausatz und dessen Bodenleitern, Traversen und Windverbände bezieht sich auf eine Mehrzahl von Elementen beziehungsweise Bauteilen. So umfasst beispielsweise der Satz Bodenleitern zwei oder mehr Bodenleitern.

Die Bodenleitern umfassen jeweils zwei über eine obere Sprosse und eine untere Sprosse miteinander verbundene Vertikalstützen. Die zwei Vertikalstützen jeder Bodenleiter sind jeweils mit einem Fuss zum Aufstellen auf einen Boden ausgestattet sind. Vorteilhafterweise sind die Bodenleitern jeweils als einstückiges Bauteil ausgebildet.

Die Bodenleitern können neben der oberen und der unteren Sprosse auch noch weitere Sprossen umfassen. Diese weiteren Sprossen können sich oberhalb der oberen Sprosse, unterhalb der unteren Sprosse und/oder zwischen der oberen und der unteren Sprosse befinden.

Typischerweise sind die Vertikalstützen und die Sprossen im Wesentlichen stangenförmig ausgebildet. Insbesondere die Sprossen aber auch die Vertikalstützen können einen im Wesentlichen runden beziehungsweise kreisförmigen Querschnitt aufweisen. Die Vertikalstützen und die Sprossen einer Bodenleiter können jeweils quasi rechtwinklig zueinander stehen, sodass die Sprossen parallel zueinander und die Vertikalstützen parallel zueinander verlaufen.

Die Vertikalstützen der Bodenleitern können über weite Strecken als Stangenprofile beziehungsweise beispielsweise runde oder vierkantige Rohre ausgebildet sein. Sie sind typischerweise aus einem robusten Material wie einem Metall hergestellt. Die Vertikalstützen einer Bodenleiter verlaufen vorteilhafterweise parallel zueinander.

Die Sprossen der Bodenleitern können ebenfalls über weite Strecken als Stangenprofile beziehungsweise Rohre ausgebildet sein. Vorteilhafterweise weisen sie einen Umfang mit einem quasi kreisförmigen Querschnitt auf. Die obere und die untere Sprosse sind im Gebrauch typischerweise horizontal ausgerichtet und verlaufen parallel zueinander. Die Sprossen sind bevorzugt aus dem gleichen Material hergestellt wie die Vertikalstützen.

Die Füsse der Bodenleitern können so geformt sein, dass sie direkt auf den Boden stellbar sind. Alternativ dazu können sie dazu ausgestaltet sein, mit einem zum Aufstellen geeigneten Element wie beispielsweise Gleitern ausgestattet zu werden. Falls ein häufiges Verschieben des aus dem Möbelbausatz erstellten Möbels beabsichtigt ist, können auch Rollen als Füsse der Bodenleitern eingesetzt werden. Die Füsse können auch höhenverstellbar sein, um ein einfaches Ausrichten eines erzeugten Möbels zu ermöglichen.

Die längsförmigen Traversen sind jeweils an ihren Längsenden mit einer Einrastklaue ausgestattet. Dabei sind die Einrastklausen jeweils dazu ausgebildet, werkzeuglos an einer der Sprossen einer der Bodenleitern montiert zu werden. Insbesondere können die Einrastklauen dazu ausgebildet sein, an der einen der Sprossen einzuschnappen und dann daran eingerastet zu sein.

Die längsförmigen Windverbände sind jeweils an ihren Längsenden mit einer Schelle ausgestattet. Dabei sind die Schellen jeweils dazu ausgebildet, an einer der Sprossen einer der Bodenleitern montiert zu werden, indem sie die eine der Sprossen umgreifen.

Die Traversen und die Windverbände sind so ausgebildet, dass eine der Traversen an der oberen Sprosse einer ersten der Bodenleitern und an der oberen Sprosse einer zweiten der Bodenleitern montierbar ist, während einer der Windverbände an der oberen Sprosse der ersten der Bodenleitern und der unteren Sprosse der zweiten der Bodenleitern montiert ist. So dimensionierte Traversen können natürlich auch an den unteren Sprossen der ersten und zweiten Bodenleitern montiert werden. In ähnlicher Weise können so dimensionierte Windverbände natürlich auch an der oberen der zweiten der Bodenleitern und der unteren der ersten der Bodenleitern montiert sein.

Die Bauteile des Möbelbausatzes sind mit Vorteil so dimensioniert, dass Möbel mit vergleichsweise wenig Bauteilen zusammengebaut werden können. Beispielsweise kann ein stabiler Tisch aus zwei Bodenleitern, zwei Traversen, einem Windverband und einem Plattenelement, wie es weiter unten detaillierter beschrieben ist, zusammengebaut werden.

Der erfindungsgemässe Möbelbausatz ermöglicht den effizienten und flexiblen Aufbau von Möbeln nach den Bedürfnissen der Nutzer. Dabei können die Nutzer die Möbel ohne Werkzeuge oder mit einfachen Standardwerkzeugen vergleichsweise einfach zusammengebauten. Eine Fachperson ist für den Aufbau nicht notwendig. Auch kann auf den Einsatz von Spezialwerkzeug verzichtet werden.

Insbesondere kann durch das Vorsehen von Traversen und Windverbänden zum Verbinden der Bodenleitern eine äusserst stabile Konstruktion mit einfachen Mitteln und unter Einsatz von vergleichsweise wenigen Bauteilen erreicht werden. Beispielsweise können zwei Bodenleitern an ihren oberen oder unteren Sprossen über zwei Traversen und gleichzeitig zwischen oberer Sprosse der einen Bodenleiter und unteren Sprosse der anderen Bodenleiter über einen Windverband miteinander verbunden werden. Die Traversen sind so also horizontal ausgerichtet und der Windverband diagonal beziehungsweise schräg. Auf diese Weise ist der Verbund von Bodenleitern, Traversen und Windverband in allen Richtungen im Raum fixiert und stabilisiert. Dies kann einen sicheren Aufbau gewährleisten, der auch für eine vergleichsweise hohe Belastung vorgesehen sein kann.

Dabei ist es durch das Ausstatten der Traversen mit den Einrastklauen möglich, dass die Traversen einfach und sicher mit den Sprossen verbunden werden. Beispielsweise können sie von oben her auf die Sprossen gedrückt werden und so auf die Sprossen einrasten, dass diese Teilweise umgriffen werden.

Durch das Ausstatten der Windverbände mit den Schellen kann erreicht werden, dass die Sprossen umgriffen sind. Damit können die Sprossen auch bei schräger Ausrichtung des Windverbands fest vom Windverband gehalten sein. Ein Verwinden der beiden Bodenleitern kann auf diese Weise sicher verhindert werden. Aus Sicherheitsgründen können die Schellen so ausgebildet sein, dass sie sich nur mit einem Schlüssel oder einem einfachen Werkzeug wie einem Schraubenzieher öffnen lassen. Damit kann ein irrtümliches Öffnen der Schellen vermieden werden.

Auch ein Abbau und ein Umbau eines aus dem erfindungsgemässen Möbelbausatz aufgebauten Möbels sind effizient möglich. Beispielsweise können an bestehende Aufbauten in einfacher Weise weitere Bodenleitern mit Traversen und Windverbänden angehängt werden. So kann ein Möbel nach Bedarf ausgebaut werden. Auch ein Rückbau beziehungsweise Abbau des Möbels ist in analoger Weise effizient und sicher möglich.

Der erfindungsgemässe Möbelbausatz ermöglicht es also, auf einfache Weise, quasi werkzeuglos, flexibel Möbel zu erstellen und umzubauen. Die Möbel können dabei robust sein und ausreichend Sicherheit bieten, dass sie beispielsweise für Büros oder Verkaufsgeschäfte geeignet sind. Insbesondere ermöglicht es der Möbelbausatz, Gestelle und Arbeitstische flexibel, effizient und sicher auf-, um- und abzubauen.

Die Traversen können so längsförmig ausgebildet sein, dass sie sich zwischen zwei Sprossen gleicher Höhe der ersten der Bodenleitern und der der zweiten der Bodenleitern erstrecken, wenn sie daran montiert sind. Vorzugsweise umfassen die Traversen jeweils einen Stangenabschnitt, der so geformt ist, dass die Einrastklauen der Traversen werkzeuglos an ihm montierbar sind. Der Stangenabschnitt kann als Stangenprofil beziehungsweise beispielsweise rundes oder vierkantiges Rohr ausgebildet sein. Mit Vorteil weisen die Stangenabschnitte der Traversen die im Wesentlichen gleiche Form beziehungsweise gleichen Querschnitt auf wie die Sprossen der Bodenleitern. So können die Einrastklauen sowohl an den Sprossen der Bodenleitern als auch an den Traversen montiert werden. Auf diese Weise können Möbel aufgebaut werden, die rechtwinklig zueinander stehende beziehungsweise sich rechtwinklig voneinander erstreckende Strukturen beziehungsweise Abschnitte aufweisen.

Vorzugsweise sind die Einrastklauen jeweils mit einem korrespondierend zu den Sprossen der Bodenleitern geformten Sprossenaufnahme und einem Schieber ausgestattet, wobei der Schieber gefedert an der Sprossenaufnahme gelagert ist und eine Betätigungsfläche aufweist. Die Betätigungsfläche kann in Bezug auf einer Einschnapp- beziehungsweise Aufdrückrichtung der Einrastklaue schräg liegen, sodass sie bei einem Aufdrücken den Schieber entgegen der Federkraft bewegt und damit die Einrastklaue öffnet. Mit einem solchen gefederten Schieber können die Einrastklauen effizient dazu ausgebildet werden, an den Sprossen und gegebenenfalls Traversen einzuschnappen. So können die Traversen einfach uns sicher montiert werden. Zum Lösen der Traversen von den Sprossen oder Traversen wird dann der Schieber beispielsweise manuell wieder verschoben, so dass die Sprossenaufnahme wieder gelöst werden kann.

Die Abstände der Sprossen sind vorteilhafterweise auf den Verwendungszweck des aus dem Möbelbausatzes aufgebauten Möbels angepasst. In Büroumgebungen kann der Abstand zwischen den Sprossen beispielsweise jeweils so dimensioniert sein, dass ein Ordner zwischen den Sprossen Platz hat. Vorzugsweise liegen die unteren Sprossen der Bodenleitern oder die oberen Sprossen der Bodenleitern auf einer Sitztischhöhe, wenn die Bodenleitern mit ihren Füssen auf dem Boden aufgestellt sind. Unter dem Begriff "Sitztischhöhe" wird in diesem Zusammenhang die Höhe einer Tischplatte eines Tischs verstanden, an dem beispielsweise zum Arbeiten gesessen wird. Die Sitzhöhe des Tischs kann in einem Bereich von etwa 60 cm bis etwa 90 cm und insbesondere von etwa 63 cm bis etwa 76 cm liegen. Da die Dicke der Tischplatte, die auf den unteren Sprossen aufliegt, die effektive Höhe der Arbeits- beziehungsweise Tischplattenoberfläche etwas erhöhen kann, kann die Sitztischhöhe der unteren Sprossen auch um die Dicke der Tischplatte tiefer sein.

Eine solche Dimensionierung der Bodenleitern ermöglicht, dass auf effiziente Weise ein Tisch zum Sitzen bereitgestellt wird, indem ein Plattenelement als Tischplatte auf die Traversen gelegt wird, welche die unteren Sprossen von zwei Bodenleitern verbinden. Das Plattenelement kann insbesondere wie weiter unten dargelegt ausgeführt sein.

In ähnlicher Weise liegen die oberen Sprossen der Bodenleitern vorzugsweise auf einer Stehtischhöhe, wenn die Bodenleitern mit ihren Füssen auf dem Boden aufgestellt sind. Unter dem Begriff "Stehtischhöhe" wird in diesem Zusammenhang die Höhe einer Tischplatte eines Tischs verstanden, an dem beispielsweise zum Arbeiten gestanden wird. Die Stehhöhe des Tischs kann in einem Bereich von etwa 85 cm bis etwa 125 cm und insbesondere von etwa 96 cm bis etwa 107 cm liegen. Da die Dicke der Tischplatte, die auf den oberen Sprossen aufliegt, die effektive Höhe der Arbeitsbeziehungsweise Tischplattenoberfläche etwas erhöht, kann die Stehtischhöhe der oberen Sprossen um die Dicke der Tischplatte tiefer sein.

Vorzugsweise sind die Füsse der Bodenleitern höhenverstellbar ausgebildet. Solche höhenverstellbaren Füsse ermöglichen ein Ausgleichen von Unebenheiten, sodass ein stabiler Stand gewährleistet werden kann.

Vorzugsweise umfasst der Möbelbausatz einen Satz Aufbauleitern, die jeweils zwei über eine obere Sprosse und eine untere Sprosse miteinander verbundene Vertikalstützen aufweisen, wobei die Vertikalstützen dazu ausgebildet sind, auf die Vertikalstützen einer anderen der Aufbauleitern oder die Vertikalstützen einer der Bodenleitern aufgesteckt zu werden. Mit solchen Aufbauleitern kann das Möbel in der Höhe nach Bedarf gestaltet werden. Insbesondere kann das Möbel flexibel in der Höhe ausgestaltet sein, um bedarfsgerecht dimensioniert zu sein.

Die Abstände der Sprossen können auch bei allen Boden- und Aufbauleitern einheitlich sein und wie erwähnt etwa die Höhe eines Ordners aufweisen. Dadurch kann mittels des Möbelbausatzes effizient ein Gestell oder ein ähnliches Möbel aufgebaut werden, das in einem Büro eingesetzt werden kann.

Die oberen Enden der Vertikalstützen der letzten Aufbauleiter oder der Bodenleiter können mit einem Deckel verschlossen werden. Solche Deckel ermöglichen ein verbessertes Erscheinungsbild des aus dem Möbelbausatz zusammengebauten Möbels.

Bevorzugt weist zumindest eine der Traversen zwei über Querstreben miteinander verbundene längsförmige Stangeabschnitte auf, wobei die zwei Stangenabschnitte an ihren Längsenden mit den Einrastklauen ausgestattet sind, sodass die zumindest eine der Traversen gleichzeitig sowohl an der oberen Sprosse der ersten der Bodenleitern und an der oberen Sprosse der zweiten der Bodenleitern als auch an der unteren Sprosse der ersten der Bodenleitern und an der unteren Sprosse der zweiten der Bodenleitern montierbar ist. Mit einer solchen Doppeltraverse kann eine besonders stabile Verbindung der zwei Bodenleitern oder von zwei Aufbauleitern erreicht werden. Dadurch können auch grössere Abstände zwischen den Boden- beziehungsweise Aufbauleitern stabil realisiert sein.

Vorzugsweise umfasst der Möbelbausatz einen Satz Blenden, die jeweils so zwischen zwei benachbarten Sprossen einer der Bodenleitern oder zwischen zwei vertikal benachbarten, parallelen Traversen anordbar sind, dass ein Abstand zu den zwei benachbarten Sprossen beziehungsweise den zwei vertikal benachbarten, parallelen Traversen vorhanden ist. Die Blenden können auch zwischen zwei benachbarten Sprossen einer Aufbauleiter angeordnet werden. Mit solchen Blenden kann ein Möbel gebildet werden, das quasi geschlossene vertikale Flächen aufweise. Dies kann als Sichtschutz dienen und/oder ein körperlicheres Erscheinungsbild erzeugen. Zudem können solche Blenden als Schallschutz dienen.

Dabei sind die Blenden vorzugsweise so dimensioniert, dass der Abstand zu den zwei benachbarten Sprossen der Bodenleiter beziehungsweise den vertikal benachbarten, parallelen Traversen jeweils so bemessen ist, dass die Einrastklauen der Traversen an den zwei benachbarten Sprossen vertikal benachbarten, parallelen Traversen montierbar sind. Solche Traversen ermöglichen, dass das Möbel weiter ausbeziehungsweise umgebaut wird, wenn es bereits mit Blenden ausgestattet ist. Insbesondere ermöglicht der Abstand, dass trotz den eingebauten Blenden weitere Traversen an den Sprossen montiert und von diesen gelöst werden können.

Vorzugsweise umfasst jede der Blenden jeweils zwei Abdeckungen. Solche aus Abdeckungen gebildete Blenden können eine einfache Konstruktion der Blenden ermöglichen. Beispielsweise können die beiden Abdeckungen als zwei gelochte oder ungelochte Bleche ausgeführt sein, die so miteinander verbunden sind, dass ein Hohlraum zwischen den Blechen vorliegt. Ein solcher Hohlraum kann beispielsweise zum Anordnen von weiteren Elementen der Blenden verwendet werden. Oder er kann eine schallschützende Funktion übernehmen.

Bevorzugt umfasst der Satz Blenden eine Mehrzahl von Befestigungsstücken, die dazu ausgebildet sind, die Blenden an zwei parallelen Traversen oder an zwei parallelen Sprossen so zu befestigen, dass die Blenden in einer Achsen zweier benachbarter Vertikalstützen umfassenden Ebene liegen. Der Begriff "in einer Ebene liegen" kann sich in diesem Zusammenhang darauf beziehen, dass die eine der Blenden an ihrer Vorder- oder Rückseite in der Ebene liegt oder insbesondere dass sich die Ebene zwischen der Vorder- und Rückseite parallel zu diesen hindurch erstreckt. Indem die Befestigungsstücke ermöglichen, dass die Blenden in einer Ebene mit den Vertikalstützen liegen, kann ein vergleichsweise ruhiges und gleichmässiges Erscheinungsbild des Möbels erzeugt werden.

Dabei umfasst die Mehrzahl von Befestigungsstücken vorzugsweise erste Befestigungsstücke, die dazu ausgebildet sind, dass die Blenden versetzt zu einer durch die zwei parallelen Traversen gebildeten Ebene liegen, wenn sie an den zwei parallelen Traversen befestigt sind, und zweite Befestigungsstücke, die dazu ausgebildet sind, dass die Blenden in einer durch die zwei parallelen Sprossen gebildeten Ebene liegen, wenn sie an den zwei parallelen Sprossen befestigt sind. Da die Traversen typischerweise nicht in einer durch zwei Vertikalstützen gebildeten Ebenden sondern versetzt dazu liegen, ermöglichen unterschiedlichen Befestigungsstücke, dass die Blenden zwischen zwei Vertikalpfosten liegen unabhängig davon, ob sie an Sprossen oder an Traversen montiert sind.

Bevorzugt weisen die Abdeckungen jeweils eine Schiene auf und die Abdeckungen und die Befestigungsstücke sind so ausgebildet, dass die Schienen der zwei Abdeckungen jeder der Blenden zusammen eines der Befestigungsstücke aufnehmen und die zwei Abdeckungen jeder der Blenden dadurch aneinander befestigt sind. Mit Vorteil sind die Abdeckungen jeweils mit mehreren Schienen ausgestattet. Beispielsweise können sie für eine stabile Befestigung an den Sprossen beziehungsweise Traversen mit vier Schienen ausgestattet sein. Solche Schienen ermöglichen, dass die Befestigungsstücke effizient an den Abdeckungen montiert werden können und dass gleichzeitig die Abdeckungen zusammengefügt werden, sodass zwei Abdeckungen zusammen mit den Schienen und den Befestigungsstücken ein Teil bilden.

Vorzugsweise sind dabei die Befestigungsstücke jeweils mit einem in eine verriegelte Position und eine entriegelte Position stellbaren Riegel ausgestattet, die Schienen der Abdeckungen umfassen jeweils eine Riegelaufnahme und die Riegel verriegeln jeweils das zugehörige Befestigungsstück mit den Schienen der zwei Abdeckungen, in die das Befestigungsstück aufgenommen ist, wenn der Riegel in die verriegelte Position gestellt ist. Solche Verriegelungsstrukturen ermöglichen einen effizienten, konfektionierten beziehungsweise auf den Verwendungszweck angepassten Zusammenbau der Blenden. Beispielsweise können die Blenden beim Aufbau beziehungsweise Umbau des Möbels so ausgebildet werden, dass sie zu ihrem vorgesehenen Einsatzzweck passen.

Vorzugsweise umfasst der Möbelbausatz ein Plattenelement, das dazu ausgebildet ist, auf zwei parallelen Traversen aufzuliegen, wenn die zwei parallelen Traversen an der ersten der Bodenleitern und der zweiten der Bodenleitern montiert sind, wobei ein Abstand zwischen dem Plattenelement und den Sprossen der ersten der Bodenleitern und der zweiten der Bodenleitern, an denen die zwei parallelen Traversen montiert sind, vorhanden ist. Das Plattenelement kann eine Tischplatte, ein Regalboden oder etwas ähnliches sein. Mit solchen Plattenelementen können auf effiziente Weise Regale beziehungsweise Gestelle und Tische konstruiert werden.

Dabei ist das Plattenelement vorzugsweise so dimensioniert, dass der Abstand zu den Sprossen der ersten der Bodenleitern und der zweiten der Bodenleitern jeweils so bemessen ist, dass die Einrastklauen der Traversen an den zwei benachbarten Sprossen montierbar sind. Indem der Abstand zwischen den Sprossen und dem Plattenelement so vorgesehen wird, kann erreicht werden, dass an den Sprossen weiterhin Traversen montiert und demontiert werden, auch wenn das Plattenelement vorhanden ist.

Um eine Montage und Demontage der Traversen beziehungsweise eine Zugänglich für deren Einrastklauen sicher zu stellen, liegt der Abstand vorzugsweise in einem Bereich von etwa 5 mm bis etwa 20 mm, in einem Bereich von 8 mm bis etwa 15 mm und insbesondere in einem Bereich von etwa 10 mm bis etwa 13 mm. In Ausführungsformen des Möbelbausatzes, in denen sowohl Blenden als auch Plattenelemente vorhanden sind, können alle involvierten Abstände im angegebenen Bereich liegen. Insbesondere können alle Abstände einheitlich dem gleichen Abstand entsprechen. Eine solche Gestaltung ermöglicht an allen möglichen Stellen des Möbels, dass die Einrastklauen montiert und demontiert werden, ohne dass bereits bestehende Teile des Möbels betroffen sind.

Vorzugsweise ist das Plattenelement mit zumindest zwei Auflagen ausgestattet, die jeweils eine von zwei parallelen Traversen teilweise umgreifen, wenn das Plattenelement auf den zwei parallelen Traversen aufliegt. Solche Auflagen ermöglichen eine stabile Anordnung des Plattenelements auf den Traversen. Insbesondere kann ein seitliches Verrutschen des Plattenelements vermieden werden.

Mit Vorteil sind pro Traverse mehrere Auflagen am Plattenelement vorgesehen. Beispielsweise können die Platten mit vier oder sechs Auflagen ausgestattet sein, sodass jeder der zwei Traversen zwei oder drei Auflagen zugeordnet sind. So kann ein stabiles Auflegen des Plattenelements auf die Traversen erreicht werden.

Die Auflagen können mit einem Band oder einer ähnlichen Struktur versehen sein, mit der die Traversen an den Auflagen fixiert werden können. Auf diese Weise kann das Plattenelement an den Traversen gesichert sein.

Bevorzugt weisen die zumindest zwei Auflagen des Plattenelements jeweils ein erstes Steckteil und die Traversen jeweils ein zweites Steckteil auf, die so ausgebildet sind, dass die ersten und zweiten Steckteile ineinander greifen, wenn das Plattenelement auf den zwei parallelen Traversen aufliegt. Auf diese Weise kann das Plattenelement genau auf den Traversen ausgerichtet beziehungsweise positioniert werden. Unter anderem ermöglicht das ein genaues Festlegen des Abstands. Beispielsweise kann so der Abstand vergleichsweise klein gehalten werden, dass quasi keine Abweichungen bei der Positionierung des Plattenelements auf den Traversen möglich ist.

Die ersten und zweiten Steckteile können auf unterschiedliche Weise an den Auflagen und den Traversen vorgesehen sein. Beispielsweise kann das erste Steckteil ein an der Auflage ausgebildeter Zapfen als männliches Steckteil sein und das zweite Steckteil ein Bohrloch als weibliches Steckteil in der Traverse. Es ist auch möglich, dass die Traverse mit männlichen Steckteilen ausgestattet ist und die Auflagen mit weiblichen.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden der erfindungsgemässe Möbelbausatz unter Bezugnahme auf die beigefügten Zeichnungen anhand von Ausführungsbeispielen detaillierter beschrieben. Es zeigen:
- Fig. 1: eine Ansicht von vorne an eine Bodenleiter eines ersten Ausführungsbeispiels eines erfindungsgemässen Möbelbausatz;
- Fig. 2: eine Ansicht von vorne an eine Aufbauleiter des Möbelbausatzes von Fig. 1;
- Fig. 3: eine Ansicht von oben auf eine Traverse des Möbelbausatzes von Fig. 1;
- Fig. 4: eine Ansicht von der Seite an eine Einrastklaue der Traverse von Fig. 3;
- Fig. 5: eine Ansicht von vorne an einen Windverband des Möbelbausatzes von Fig. 1;
- Fig. 6: eine Ansicht von oben auf den Windverband von Fig. 5;
- Fig. 7: eine perspektivische Ansicht einer Schelle des Windverbands von Fig. 5;
- Fig. 8: eine perspektivische Ansicht einer aus dem Möbelbausatz von Fig. 1 aufgebauten Gestellkonstruktion;
- Fig. 9: eine perspektivische Ansicht von unten an ein Plattenelement des Möbelbausatzes von Fig. 1;
- Fig. 10: eine Sicht auf das auf der Gestellkonstruktion von Fig. 8 montierte Plattenelement von Fig. 9;
- Fig. 11: eine perspektivische Detailansicht der Gestellkonstruktion von Fig. 8 und des Plattenelements von Fig. 9 während dessen Montage;
- Fig. 12: eine perspektivische Ansicht einer von zwei Abdeckungen einer Blende des Möbelbausatzes von Fig. 1;
- Fig. 13: eine perspektivische Ansicht eines Befestigungsstücks erster Variante der Blende von Fig. 12, das in einer Schiene der Abdeckung von Fig. 12 angeordnet ist;
- Fig. 14: eine andere perspektivische Ansicht des Befestigungsstücks von Fig. 13;
- Fig. 15: eine perspektivische Ansicht der Abdeckung von Fig. 12, an dem Befestigungsstücke zweiter Variante angeordnet sind;
- Fig. 16: eine perspektivische Ansicht der Gestellkonstruktion von Fig. 8 mit daran montierten Blenden gemäss Fig. 13 und gemäss 15;
- Fig. 17: eine Sicht auf die Gestellkonstruktion von Fig. 16; und
- Fig. 18: eine perspektivische Ansicht eines aus einem zweiten Ausführungsbeispiel eines erfindungsgemässen Möbelbausatzes aufgebauten Möbels.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

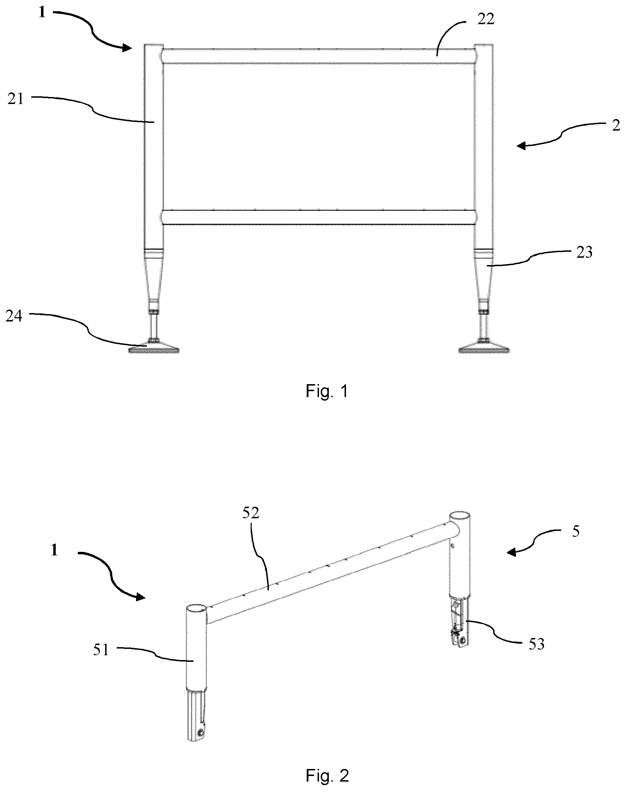

Fig. 1 zeigt eine Bodenleiter 2 eines Satzes Bodenleitern 2 eines ersten Ausführungsbeispiels eines erfindungsgemässen Möbelbausatzes 1. Die Bodenleiter 2 besteht aus zwei parallelen Vertikalstützen 21, die durch zwei horizontale Sprossen 22 miteinander verbunden sind. Die Sprossen 22 sind als gerade Rohre mit einem kreisförmigen Querschnitt ausgebildet. Sie stehen in einem rechten Winkel zu den Vertikalstützen 21 und sind mit diesen fest verbunden wie beispielsweise verschweisst. Die Vertikalstützen 21 sind ebenfalls grösstenteils als gerade Rohre mit kreisförmigem Querschnitt ausgebildet und gehen nach unten jeweils in einen sich verjüngenden Fuss 23 über. Die beiden Füsse 23 sind jeweils mit einem Gleiter 24 ausgestattet, der zum Aufstellen der Bodenleiter 2 auf dem Boden angeordnet wird.

In Fig. 2 ist eine einsprossige Aufbauleiter 5 eines Satzes Aufbauleitern 5 des Möbelbausatzes 1 gezeigt. Die Aufbauleiter 5 umfasst zwei rohrförmige Vertikalstützen 51, die über eine rohrförmige Sprosse 52 fest miteinander verbunden sind. Zusammen sind die Vertikalstützen 51 und die Sprosse 52 quasi U-förmig. Die Sprossen 52 der Aufbauleiter sind gleich dimensioniert wie die Sprossen 22 der Bodenleiter 2 von Fig. 1, sodass die Aufbauleiter 5 zur Bodenleiter 2 passt.

Von den unteren Enden der Vertikalstützen 51 der Aufbauleiter 5 erstreckt sich jeweils ein Rohrverbinder 23 vertikal nach unten. Die Rohrerbinder 23 sind so ausgestaltet, dass sie in die Vertikalstützen 21 der Bodenleiter 2 oder in Vertikalstützen 51 einer weiteren Aufbauleiter 5 eingeführt werden können und durch Betätigung die verbundenen Vertikalstützen 21, 51 aneinander fixiert.

Neben der Aufbauleiter 5, wie sie in Fig. 2 gezeigt ist, umfasst der Satz Aufbauleitern 5 des Möbelbausatz 1 weitere Aufbauleitern mit über zwei parallele Sprossen verbundenen Vertikalstützen. Im Vergleich zur einsprossigen Ausführungsform von Fig. 2 sind diese Aufbauleitern länger beziehungsweise höher ausgebildet.

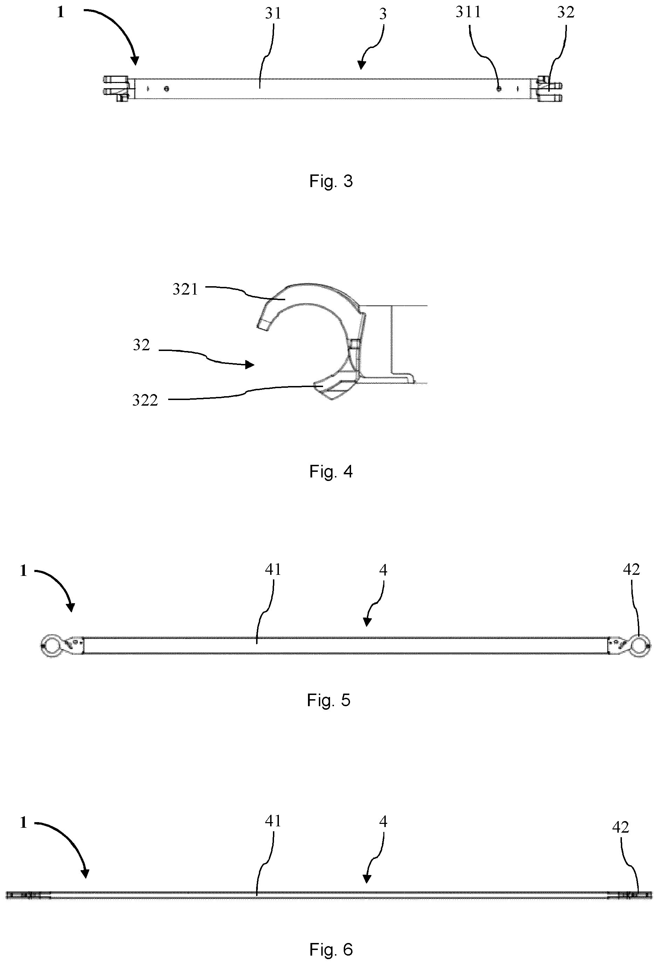

Fig. 3 zeigt eine Traverse 3 eines Satzes von Traversen 3 des Möbelbausatzes 1. Die Traverse 3 ist aus einem längsförmigen Stangenabschnitt 31 und sich jeweils von den Längsenden des Stangenabschnitts links beziehungsweise rechts nach aussen erstreckenden Einrastklauen 32 gebildet. Der Stangenabschnitt 31 ist aus einem Rohr mit einem kreisförmigen Durchmesser geformt, der dem Durchmesser der Sprosse 52 der Aufbauleiter 5 und der Sprossen 22 der Bodenleiter 2 entspricht. Auf seiner Oberseite ist der Stangenabschnitt 31 nahe seiner Längenden jeweils mit einer Bohrung 311 als weibliches Steckteil ausgestattet.

In Fig. 4 ist die linke der beiden Einrastklauen 32 der Traverse 3 von Fig. 3 vergrössert dargestellt. Dabei ist ersichtlich, dass die Einrastklaue 32 eine obere entsprechend zu den Sprossen 22, 52 der Boden- und Aufbauleitern 2, 5 geformte Sprossenaufnahme 321 aufweist und einen unteren Schieber 322. Die Einrastklaue 32 ist mit einer Feder ausgestattet, die den Schieber 322 in die in Fig. 4 gezeigte Position nach links drückt. In dieser Position ist die Einrastklaue 32 an einer Sprosse 22, 52 oder einem Stangenabschnitt 31 einer anderen Traverse 3 eingerastet, wenn die Sprossenaufnahme 321 diese(n) aufnimmt. Die Traverse 3 ist dann an der Sprosse 22, 52 beziehungsweise dem Stangenabschnitt 31 montiert.

Zum Lösen der Einrastklaue 32 wird der Schieber 322 beispielsweise manuell entgegen der Federkraft nach rechts gedrückt. Dadurch wird die Einrastklaue 32 geöffnet und die Traverse 3 kann entfernt werden. Zum Montieren der Traverse 3 an einer Sprosse 22, 52 beziehungsweise an einem Stangenabschnitt 31 einer anderen Traverse 3 wird die Einrastklaue 32 von oben her auf die Sprosse 22, 52 oder den Stangenabschnitt 31 gedrückt. Durch die als Betätigungsfläche ausgestaltete, abgeschrägte Unterseite des Schiebers 322 wird dieser dabei nach rechts gedrückt, sodass die Sprossenaufnahme 321 die Sprosse 22, 52 beziehungsweise den Stangenabschnitt 31 aufnehmen kann. Getrieben von der Feder schnappt der Schieber 322 dann unterhalb der Sprosse 22, 52 beziehungsweise des Stangenabschnitts 31 wieder ein, sodass eine sichere Befestigung erreicht wird.

In Fig. 5 ist ein Windverband 4 eines Satzes von Windverbänden 4 des Möbelbausatzes 1 gezeigt. Der Windverband 4 weist einen Stangenabschnitt 41 auf, der an seinen Längsenden jeweils in eine Schelle 42 übergeht. Wie zusammen mit der Fig. 6 ersichtlich ist, ist der Stangenabschnitt 41 als massive Vierkantstange mit einem rechteckigen Querschnitt ausgeführt. Durch die massive Ausführung kann der Windverband besonders robust und zur Aufnahme vergleichsweise grosser Kräfte ausgebildet sein.

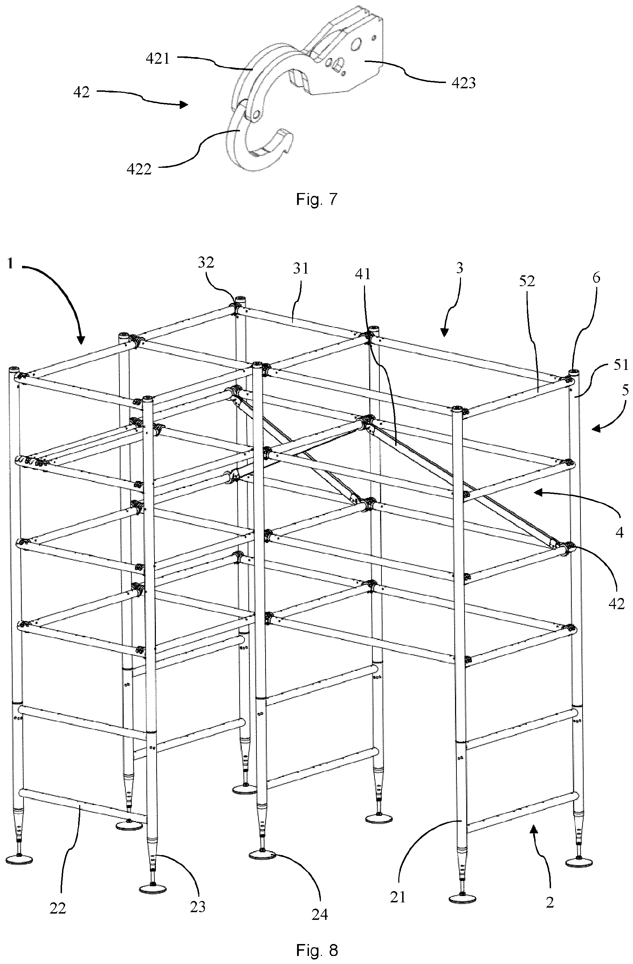

Fig. 7 zeigt eine der Schellen 42 des Windverbands 4 in einer geöffneten Stellung. Die Schelle 42 ist handschellenartig mit einer Basis 423, einem oberen Umgreifteil 421 und einem unteren Umgreifteil 422 ausgestattet. Das untere Umgreifteil 422 ist über ein Scharniergelenk schwenkbar am oberen Umgreifteil 421 montiert. In der Basis 423 ist eine Verriegelung angeordnet, die den unteren Umgreifteil 422 fixiert, wenn die Schelle 42 so geschlossen ist, dass sie eine Sprosse 22, 52 umgreift. Insbesondere ist der untere Umgreifteil 422 mit einer Rastnase ausgestattet, der hinter einen gefederten Riegel der Verriegelung greift. Die Sprosse 22, 52 ist so fest gehalten und ein Lösen der Schnalle 42 ohne Betätigung der Verriegelung kann vermieden werden.

In Fig. 8 ist eine aus dem Möbelbausatz 1 aufgebaute Gestellkonstruktion als dreidimensionale tragende Rohrstruktur gezeigt. Dabei umfasst die Gestellkonstruktion vier Leitern, die jeweils aus einer Bodenleiter 2 und zwei vertikal darauf aufgesteckten Aufbauleitern 5 mit jeweils zwei Sprossen 52 gebildet sind. Die Sprossen 52 der Aufbauleitern 5, welche auf gleicher Höhe liegen, sind jeweils über zwei Traversen 3 miteinander verbunden. Dazu sind die Einrastklauen 32 der Traversen 3 anliegend an die Vertikalstützen 51 der Aufbauleitern 5 an den Sprossen 52 montiert. Gleichzeitig sind mehrere Windverbände 4 diagonal beziehungsweise schräg mit Sprossen 52 auf zwei unterschiedlichen Höhen verbunden.

Durch das Vorsehen der Traversen 3 zusammen mit den Windverbänden 4 an den Leitern ist die Gestellkonstruktion äusserst robust und steif. Insbesondere kann sie auf diese Weise vergleichsweise grosse Lasten aufnehmen. Die oberen Enden der Rohrabschnitte 51 der obersten Aufbauleitern 5 sind mit Deckeln 6 abgedeckt und verschlossen.

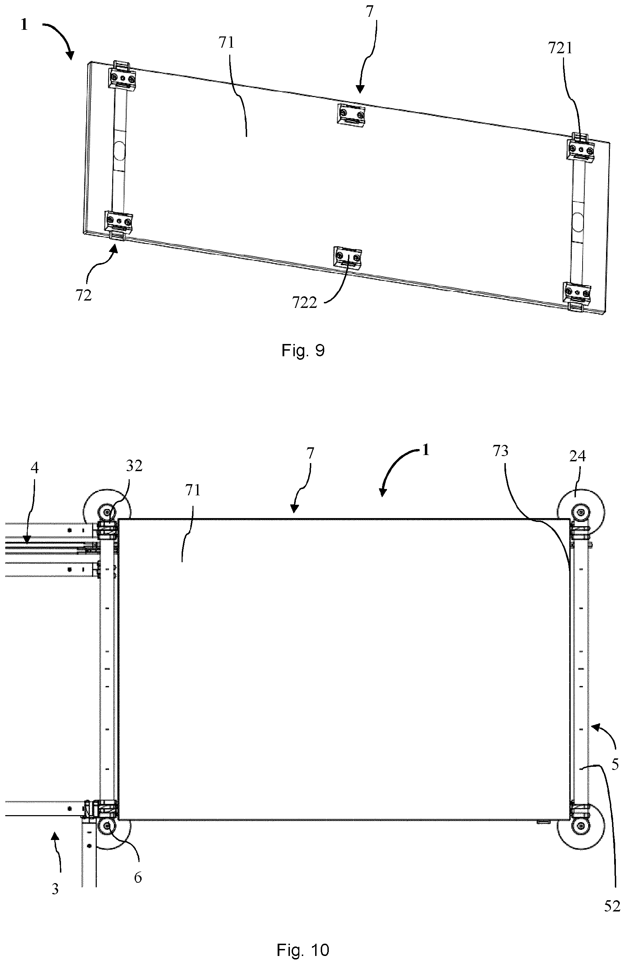

Fig. 9 zeigt ein Plattenelement 7 des Möbelbausatzes 1. Das Plattenelement 7 umfasst ein Brett 71 beziehungsweise eine Platte, an dessen Unterseite nahe der Längskanten Auflagen 72 angeordnet sind. Insbesondere umfassen die Auflagen 72 vier Positionierauflagen 721 und mittig dazwischen zwei Stützauflagen 722.

Wie in Fig. 10 ersichtlich ist, ist das Plattenelement 7 dazu ausgebildet, auf zwei parallelen Traversen 3 der Gestellkonstruktion aufzuliegen. Dabei ist jeweils ein Abstand 73 zwischen dem Plattenelement 7 und den Sprossen 52, an denen die zwei parallelen Traversen 3 montiert sind, vorhanden. Die Abstände 73 sind einheitlich so bemessen, dass die Einrastklauen 32 der Traversen 3 an den Sprossen 52 montierbar und davon entfernbar sind.

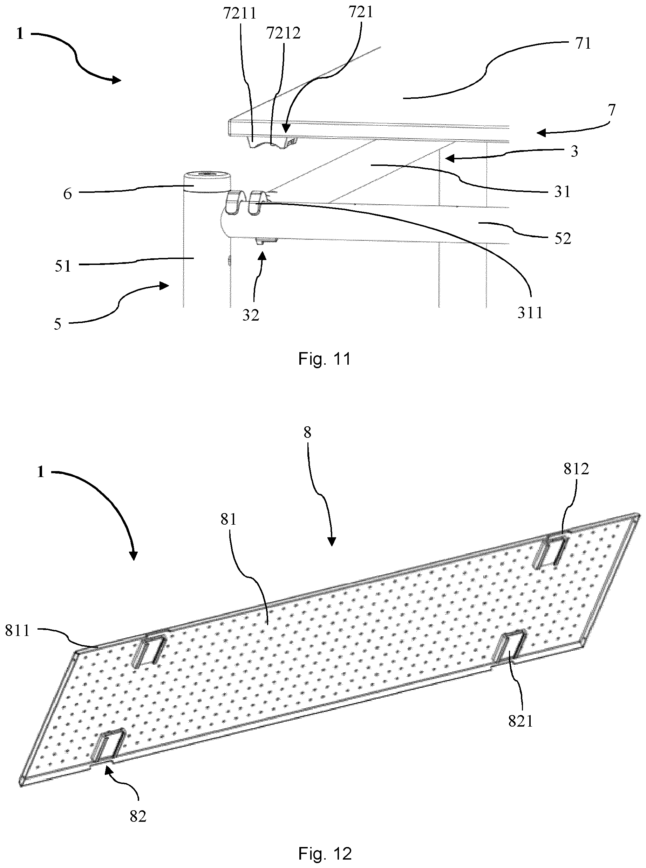

In Fig. 11 ist das Plattenelement 7 während einer Montage an der Gestellkonstruktion gezeigt. Dazu wird es auf die Traversen 3 aufgelegt. Die Positionierauflagen 721 weisen einen Umgreifabschnitt 7211 und einen Bolzen 7212 als männliches Steckteil auf. Der Umgreifabschnitt 7211 ist dazu ausgestaltet, die zugehörige Traverse 3 teilweise zu umgreifen, sodass das Plattenelement 7 gegen ein horizontales Verschieben auf den Traversen 3 gesichert ist. Beim Auflegen auf die Traversen 3 werden die Bolzen 7212 in die Bohrungen 311 eingeführt, sodass einerseits das Plattenelement 7 weiter gegen ein horizontales Verschieben gesichert ist und andererseits das Plattenelement 7 genau auf den Traversen 3 positioniert ist. Dadurch kann erreicht werden, dass die Abstände 73 präzise vorhanden sind, was für ein sicheres Montieren beziehungsweise Demontieren anderer Traversen 3 an den Sprossen 52 notwendig ist.

Fig. 12 zeigt eine von zwei Abdeckungen 81 einer Blende 8 eines Satzes Blenden 8 des Möbelbausatzes 1. Die Abdeckung 81 ist als gelochtes Blech mit einem umgebogenen Rand 811 ausgebildet. Nahe des längsseitigen Randes 811 ist die Abdeckung 81 jeweils mit zwei Schienen 82 ausgestattet. Die Schienen 82 weisen jeweils eine Aufnahmefassung 821 auf. Korrespondierend zu den Schienen 82 ist der Rand 811 der Abdeckung 81 jeweils mit einem Durchbruch 812 ausgestattet, durch welchen die zugehörige Schiene 82 zugänglich ist.

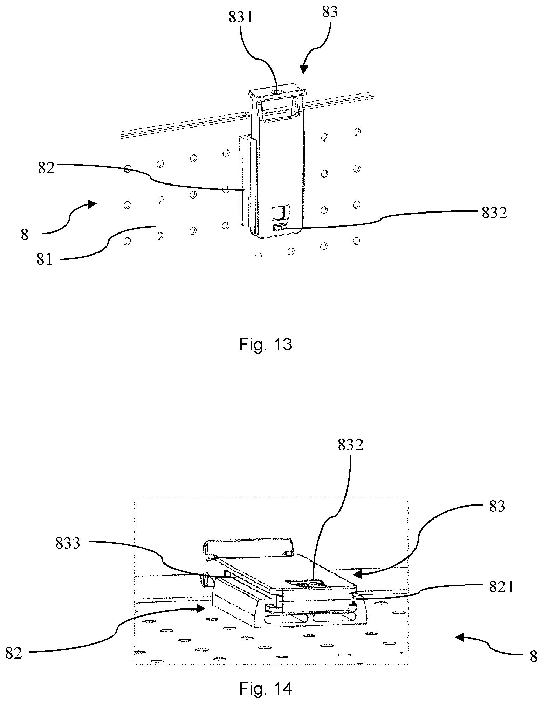

In Fig. 13 ist eine der Schienen 82 der Abdeckung 81 mit einer ersten Variante eines Befestigungsstücks 83 der Blende 8 gezeigt. Das Befestigungsstück 83 ist gerade ausgerichtet und umfasst einen Blockabschnitt, der in die Aufnahmefassung 821 der zugehörigen Schiene 82 eingeschoben ist. Das Befestigungsstück 83 erstreckt sich von der Schiene 82 durch den Durchbruch 812 aus der Blende 8 hinaus. Im Innern des Befestigungsstücks 83 ist ein Verriegelungsmechanismus angeordnet, der durch eine Öffnung 831 hindurch mit einem Werkzeug wie beispielsweise einen Schraubenzieher zugänglich ist. Der Riegelmechanismus umfasst einen Riegel 832, der durch ein Fenster im Blockabschnitt des Befestigungsstücks 83 hindurch ragen kann, wenn der Riegelmechanismus entsprechend eingestellt ist.

Wie in der Ansicht von Fig. 14 ersichtlich ist, ist das Befestigungsstück 83 an den beiden Längsseiten des Blockabschnitts mit einer Nut 833 ausgestattet, die in einen umgebogenen Rand der Aufnahmefassung 821 der Schiene 82 eingeschoben ist. Im zusammengebauten Zustand der Blende ist eine zweite identische Abdeckung 81 um 180° gedreht auf der ersten Abdeckung 81 angeordnet, sodass das Befestigungsstück 83 in den Aufnahmefassungen 821 von entsprechenden zwei Schienen 82 der beiden Abdeckungen 81 angeordnet ist. Dadurch sind die beiden Abdeckungen 81 anliegend aneinander befestigt. Insbesondere kann durch die vier analogen Schienen 82 eine stabile Verbindung der beiden Abdeckungen 81 und eine Blende aus einem Teil erzeugt werden. Die Riegel 832 stehen in der in Fig. 14 dargestellten Position beidseitig von den Befestigungsstücken 83 ab. Die Befestigungsstücke 82 sind symmetrisch ausgebildet, sodass Riegel 832 beidseitig nach oben und nach unten von den Blockabschnitten abstehen. Dadurch sind die Befestigungsstücke 83 an den Schienen 82 blockiert und die beiden Abdeckungen 81 zueinander gesichert.

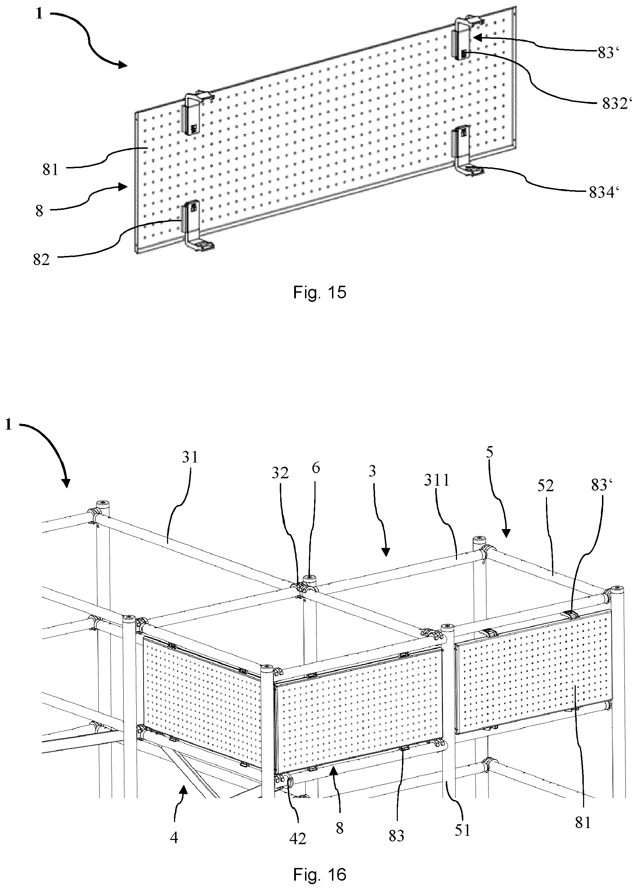

In Fig. 15 ist die Abdeckung 81 mit einer zweiten Variante von Befestigungsstücken 83' ausgestattet. Die Befestigungsstücke 83` sind über weite Strecken identisch ausgebildet wie die Befestigungsstücke 83 erster Variante. Insbesondere umfassen sie die gleichen Blockabschnitte und den gleichen Riegelmechanismus. Im Unterschied zu den geraden Befestigungsstücken 83 sind die Befestigungstücke 83` zweiter Variante angewinkelt beziehungsweise rechtwinklig geformt.

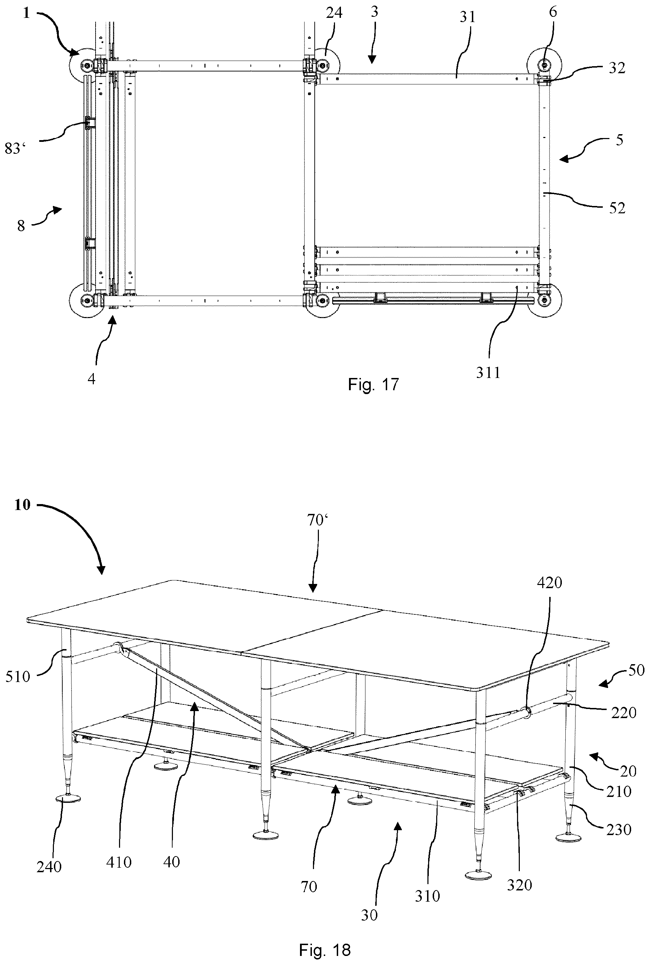

Fig. 16 und Fig. 17 zeigen eine Blende 8 mit Befestigungsstücken 83 erster Variante und zwei Blenden 8 mit Befestigungsstücken 83` zweiter Variante an der Gestellkonstruktion montiert. Dabei ist ersichtlich, dass die mittlere Blende 8 mit den Befestigungsstücken 83 erster Variante so zwischen und an zwei benachbarten Sprossen 52 einer der Aufbauleitern 5 angeordnet ist, dass ein Abstand zu den zwei benachbarten Sprossen 52 vorhanden ist. Der Abstand ist so dimensioniert, dass die Sprossen 52 jeweils für die Einrastklauen 32 der Traversen 3 zugänglich sind. Dabei liegt die mittlere Blende 8 zwischen den Sprossen 52 und in einer durch die Vertikalstützen 51 der zugehörigen Aufbauleiter 5 gebildeten Ebene.

Die linken und rechten Blenden 8 sind mit den Befestigungsstücken 83` zweiter Variante ausgestattet. Die Befestigungsstücke 83` sind jeweils an den Stangenabschnitten 31 zweier vertikal paralleler Traversen 3 montiert. Wie dies insbesondere auch in Fig. 16 gut ersichtlich ist, ermöglicht die angewinkelte Form der Befestigungsstücke 83`, dass die Blenden 8 versetzt zu den Traversen 3 und insbesondere in einer durch die Vertikalstützen 51 der durch die Traversen 3 verbundenen Aufbauleitern 5 gebildeten Ebene liegen. So können die Blenden 8 zusammen eine gleichförmige äussere Abdeckung der Gestellkonstruktion bilden.

Fig. 18 zeigt einen aus einem zweiten Ausführungsbeispiel eines erfindungsgemässen Möbelbausatzes 10 zusammengebauten Arbeitstisch als Möbel. Der Möbelbausatz 10 umfasst drei Bodenleitern 20, die identisch zu den Bodenleitern 2 aus Fig. 1 mit zwei parallele Füsse 230 aufweisenden Vertikalstützen 210, zwei die Vertikalstützen 210 rechtwinklig verbindenden Sprossen 220 und zwei Gleitern 240 ausgestattet sind. Weiter weist der Möbelbausatz 10 drei jeweils auf den Bodenleitern 20 angeordnete Aufbauleitern 50, die identisch wie die einsprossige Aufbauleiter 5 von Fig. mit zwei parallelen Vertikalstützen 510 und einer Sprosse ausgestattet sind. Zudem umfasst der Möbelbausatz 10 sechzehn Traversen 30, zwei Windverbände 40 und vier Plattenelemente 70, die jeweils entsprechend den oben beschriebenen Traversen 3, Windverbänden 4 und Plattenelementen 7 ausgebildet sind. Die Traversen 30 sind mit Stangenabschnitten 310 und Einrastklauen 320 ausgestattet und die Windverbände 40 mit Stangenabschnitten 410 und Schellen 420.

Speziell am Möbelbausatz 10 ist, dass er zwei weitere Plattenelemente 70` umfasst, die grösser ausgebildet sind, als die Plattenelemente 70. Dabei liegen die Plattenelemente 70 auf den acht oberen Traversen 30, welche die Sprossen der Aufbauleitern 50 miteinander verbinden, auf und sind an diesen befestigt. Die Plattenelemente 70' überstehen die Aufbauleitern 50 und die Traversen 30 nach allen Seiten hin. Dadurch können sie eine vergleichsweise grosszügige Tischplatte bilden. Mittels der Bodenleitern 20 und der Aufbauleitern 50 ist die Tischplatte auf einer Höhe angeordnet, auf der bequem auf ihr gearbeitet werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Möbelbausatz (1; 10) mit
einem Satz Bodenleitern (2; 20), die jeweils zwei über eine obere Sprosse (22; 220) und eine untere Sprosse (22; 220) miteinander verbundene Vertikalstützen (21; 210) umfassen, wobei die zwei Vertikalstützen (21; 210) jeweils mit einem vorzugsweise höhenverstellbaren Fuss (23; 230) zum Aufstellen auf einen Boden ausgestattet sind,
einem Satz längsförmiger Traversen (3; 30), die jeweils an ihren Längsenden mit einer Einrastklaue (220) ausgestattet sind, die dazu ausgebildet ist, werkzeuglos an einer der Sprossen (22; 220) einer der Bodenleitern (2; 20) montiert zu werden, und
einem Satz längsförmiger Windverbände (4; 40), die jeweils an ihren Längsenden mit einer Schelle (42; 420) ausgestattet sind, die dazu ausgebildet ist, an einer der Sprossen (22; 220) einer der Bodenleitern (2; 20) montiert zu werden, indem sie die eine der Sprossen (22; 220) umgreift, wobei
die Traversen (3; 30) und die Windverbände (4; 40) so ausgebildet sind, dass eine der Traversen (3; 30) an der oberen Sprosse (22; 220) einer ersten der Bodenleitern (2; 20) und an der oberen Sprosse (22; 220) einer zweiten der Bodenleitern (2; 20) montierbar ist, während einer der Windverbände (4; 40) an der oberen Sprosse (22; 220) der ersten der Bodenleitern (2; 20) und der unteren Sprosse (22; 220) der zweiten der Bodenleitern (2; 20) montiert ist.

2. Möbelbausatz (1; 10) nach Anspruch 1, der ein Plattenelement (7; 70, 70`) umfasst, das dazu ausgebildet ist, auf zwei parallelen Traversen (3; 30) aufzuliegen, wenn die zwei parallelen Traversen (3; 30) an der ersten der Bodenleitern (2; 20) und der zweiten der Bodenleitern (2; 20) montiert sind, so dass jeweils ein Abstand zwischen dem Plattenelement (7; 70, 70`) und den Sprossen (22; 220) der ersten der Bodenleitern (2; 20) und der zweiten der Bodenleitern (2; 20), an denen die zwei parallelen Traversen (3; 30) montiert sind, vorhanden ist.

3. Möbelbausatz (1; 10) nach Anspruch 2, wobei das Plattenelement (7; 70, 70`) so dimensioniert ist, dass der Abstand zu den Sprossen (22; 220) der ersten der Bodenleitern (2; 20) und der zweiten der Bodenleitern (2; 20) jeweils so bemessen ist, dass die Einrastklauen (32; 320) der Traversen (3; 30) an den zwei benachbarten Sprossen (22; 220) montierbar sind.

4. Möbelbausatz (1; 10) nach Anspruch 2 oder 3, wobei das Plattenelement (7; 70, 70`) mit zumindest zwei Auflagen (721) ausgestattet ist, die jeweils eine von zwei parallelen Traversen (3; 30) teilweise umgreifen, wenn das Plattenelement (7; 70, 70`) auf den zwei parallelen Traversen (3; 30) aufliegt, wobei vorzugsweise die zumindest zwei Auflagen (721) des Plattenelements (7; 70, 70`) jeweils ein erstes Steckteil (7212) und die Traversen (3; 30) jeweils ein zweites Steckteil (311) aufweisen, die so ausgebildet sind, dass die ersten und zweiten Steckteile ineinander greifen, wenn das Plattenelement (7; 70, 70`) auf den zwei parallelen Traversen (3; 30) aufliegt.

5. Möbelbausatz (1; 10) nach einem der vorangehenden Ansprüche, der einen Satz Blenden (8) umfasst, die jeweils so zwischen zwei benachbarten Sprossen (22; 220) einer der Bodenleitern (2; 20) oder zwischen zwei vertikal benachbarten, parallelen Traversen (3; 30) anordbar sind, dass ein Abstand zu den zwei benachbarten Sprossen (22; 220) beziehungsweise den zwei vertikal benachbarten, parallelen Traversen (3; 30) vorhanden ist.

6. Möbelbausatz (1; 10) nach Anspruch 5, wobei die Blenden (8) so dimensioniert sind, dass der Abstand zu den zwei benachbarten Sprossen (22; 220) der Bodenleiter (2; 20) beziehungsweise den vertikal benachbarten, parallelen Traversen (3; 30) jeweils so bemessen ist, dass die Einrastklauen (32; 320) der Traversen (3; 30) an den zwei benachbarten Sprossen (22; 220) vertikal benachbarten, parallelen Traversen (3; 30) montierbar sind.

7. Möbelbausatz (1; 10) nach Anspruch 5 oder 6, wobei jede der Blenden (8) jeweils zwei Abdeckungen (81) umfasst.

8. Möbelbausatz (1; 10) nach einem der Ansprüche 5 bis 7, wobei der Satz Blenden (8) eine Mehrzahl von Befestigungsstücken (83, 83') umfasst, die dazu ausgebildet sind, die Blenden (8) an zwei parallelen Traversen (3; 30) oder an zwei parallelen Sprossen (22; 220) so zu befestigen, dass die Blenden (8) in einer Achsen zweier benachbarter Vertikalstützen (21; 210) umfassenden Ebene liegen, wobei die Mehrzahl von Befestigungsstücken (83, 83`) vorzugsweise erste Befestigungsstücke (83) umfasst, die dazu ausgebildet sind, dass die Blenden (8) versetzt zu einer durch die zwei parallelen Traversen (3; 30) gebildeten Ebene liegen, wenn sie an den zwei parallelen Traversen (3; 30) befestigt sind, und zweite Befestigungsstücke (83`), die dazu ausgebildet sind, dass die Blenden (8) in einer durch die zwei parallelen Sprossen (22; 220) gebildeten Ebene liegen, wenn sie an den zwei parallelen Sprossen (22; 220) befestigt sind.

9. Möbelbausatz (1; 10) nach Anspruch 8, wobei
die Abdeckungen (81) jeweils eine Schiene (82) aufweisen und
die Abdeckungen (81) und die Befestigungsstücke (83, 83`) so ausgebildet sind, dass die Schienen (82) der zwei Abdeckungen (81) jeder der Blenden (8) zusammen eines der Befestigungsstücke (83, 83') aufnehmen und die zwei Abdeckungen (81) jeder der Blenden (8) dadurch aneinander befestigt sind,
und wobei vorzugsweise
die Befestigungsstücke (83, 83') jeweils mit einem in eine verriegelte Position und eine entriegelte Position stellbaren Riegel (832) ausgestattet sind,
die Schienen (82) der Abdeckungen (81) jeweils eine Riegelaufnahme umfassen, und
die Riegel (832) jeweils das zugehörige Befestigungsstück (83, 83') mit den Schienen (82) der zwei Abdeckungen (81) verriegelt, in die das Befestigungsstück (83, 83`) aufgenommen ist, wenn der Riegel (832) in die verriegelte Position gestellt ist.

10. Möbelbausatz (1; 10) nach einem der Ansprüche 2 bis 9, wobei der Abstand in einem Bereich von etwa 5 mm bis etwa 20 mm, in einem Bereich von 8 mm bis etwa 15 mm und insbesondere in einem Bereich von etwa 10 mm bis etwa 13 mm liegt.

11. Möbelbausatz (1; 10) nach einem der vorangehenden Ansprüche, bei dem die Traversen (3; 30) jeweils einen Stangenabschnitt (31) aufweisen, der so geformt ist, dass die Einrastklauen (32; 320) der Traversen (3; 30) werkzeuglos an ihm montierbar sind.

12. Möbelbausatz (1; 10) nach einem der vorangehenden Ansprüche, bei dem die Einrastklauen (32; 320) jeweils mit einem korrespondierend zu den Sprossen (22; 220) der Bodenleitern (2; 20) geformten Sprossenaufnahme (321) und einem Schieber (322) ausgestattet sind, wobei der Schieber (322) gefedert an der Sprossenaufnahme (321) gelagert ist und eine Betätigungsfläche aufweist.

13. Möbelbausatz (1; 10) nach einem der vorangehenden Ansprüche, bei dem die unteren Sprossen (22; 220) der Bodenleitern (2; 20) oder die oberen Sprossen (22; 220) der Bodenleitern (2; 20) auf einer Sitztischhöhe liegen, wenn die Bodenleitern (2; 20) mit ihren Füssen (24; 240) auf dem Boden aufgestellt sind, und/oder bei dem die oberen Sprossen (22; 220) der Bodenleitern (2; 20) auf einer Stehtischhöhe liegen, wenn die Bodenleitern (2; 20) mit ihren Füssen (24; 240) auf dem Boden aufgestellt sind.

14. Möbelbausatz (1; 10) nach einem der vorangehenden Ansprüche, der einen Satz Aufbauleitern (5; 50) umfasst, die jeweils zwei über eine obere Sprosse (52; 520) und eine untere Sprosse (52; 520) miteinander verbundene Vertikalstützen (51; 510) aufweisen, wobei die Vertikalstützen (51; 510) dazu ausgebildet sind, auf die Vertikalstützen (51; 510) einer anderen der Aufbauleitern (5; 50) oder die Vertikalstützen (21; 210) einer der Bodenleitern (2; 20) aufgesteckt zu werden.

15. Möbelbausatz (1; 10) nach einem der vorangehenden Ansprüche, bei dem zumindest eine der Traversen (3; 30) zwei über Querstreben miteinander verbundene längsförmige Stangenabschnitte aufweist, wobei die zwei Stangenabschnitte an ihren Längsenden mit den Einrastklauen (32; 320) ausgestattet sind, sodass die zumindest eine der Traversen (3; 30) gleichzeitig sowohl an der oberen Sprosse (22; 220) der ersten der Bodenleitern (2; 20) und an der oberen Sprosse (22; 220) der zweiten der Bodenleitern (2; 20) als auch an der unteren Sprosse (22; 220) der ersten der Bodenleitern (2; 20) und an der unteren Sprosse (22; 220) der zweiten der Bodenleitern (2; 20) montierbar ist.

## Claims

1. Furniture kit (1; 10) comprising
a set of ground ladders (2; 20), each having two vertical supports (21; 210) connected to one another via an upper rung (22; 220) and a lower rung (22; 220), wherein the two vertical supports (21; 210) are each equipped with a preferably height adjustable foot (23; 230) for placing on the ground,
a set of longitudinal cross-bars (3; 30), each of which is equipped at its longitudinal ends with a latching claw (220) which is configured to be mounted without tools on one of the rungs (22; 220) of one of the ground ladders (2; 20), and
a set of longitudinal wind braces (4; 40), each of which is equipped at its longitudinal ends with a clamp (42; 420) which is configured to be mounted on one of the rungs (22; 220) of one of the ground ladders (2; 20) by gripping one of the rungs (22; 220), wherein
the cross-bars (3; 30) and the wind braces (4; 40) are configured such that one of the cross-bars (3; 30) can be mounted on the upper rung (22; 220) of a first of the ground ladders (2; 20) and on the upper rung (22; 220) of a second of the ground ladders (2; 20), while one of the wind braces (4; 40) is mounted on the upper rung (22; 220) of the first of the ground ladders (2; 20) and the lower rung (22; 220) of the second of the ground ladders (2; 20).

2. Furniture kit (1; 10) according to claim 1, comprising a plate element (7; 70, 70') which is configured to rest on two parallel cross-bars (3; 30) when the two parallel cross-bars (3; 30) are mounted on the first of the ground ladders (2; 20) and the second of the ground ladders (2; 20), so that there is in each case a spacing between the plate element (7; 70, 70') and the rungs (22; 220) of the first of the ground ladders (2; 20) and the second of the ground ladders (2; 20) on which the two parallel cross-bars (3; 30) are mounted.

3. Furniture kit (1; 10) according to claim 2, wherein the plate element (7; 70, 70') is dimensioned such that the spacing from the rungs (22; 220) of the first of the ground ladders (2; 20) and the second of the ground ladders (2; 20) is in each case sized such that the latching claws (32; 320) of the cross-bars (3; 30) can be mounted on the two adjacent rungs (22; 220).

4. Furniture kit (1; 10) according to either claim 2 or claim 3, wherein the plate element (7; 70, 70') is equipped with at least two supports (721) which in each case partially surround one of two parallel cross-bars (3; 30) when the plate element (7; 70, 70') rests on the two parallel cross-bars (3; 30), wherein preferably the at least two supports (721) of the plate element (7; 70, 70') each have a first plug part (7212) and the cross-bars (3; 30) each have a second plug part (311) which are configured such that the first and second plug parts engage with one another when the plate element (7; 70, 70') rests on the two parallel cross-bars (3; 30).

5. Furniture kit (1; 10) according to any of the preceding claims, comprising a set of panels (8), each of which can be arranged between two adjacent rungs (22; 220) of one of the ground ladders (2; 20) or between two vertically adjacent parallel cross-bars (3; 30) such that there is a spacing from the two adjacent rungs (22; 220) or the two vertically adjacent parallel cross-bars (3; 30).

6. Furniture kit (1; 10) according to claim 5, wherein the panels (8) are dimensioned such that the spacing from the two adjacent rungs (22; 220) of the ground ladder (2; 20) or the vertically adjacent parallel cross-bars (3; 30) is in each case sized such that the latching claws (32; 320) of the cross-bars (3; 30) can be mounted on the two adjacent rungs (22; 220) vertically adjacent parallel cross-bars (3; 30).

7. Furniture kit (1; 10) according to either claim 5 or claim 6, wherein each of the panels (8) comprises two covers (81).

8. Furniture kit (1; 10) according to any of claims 5 to 7, wherein the set of panels (8) comprises a plurality of fastening pieces (83, 83') which are configured to fasten the panels (8) to two parallel cross-bars (3; 30) or to two parallel rungs (22; 220) such that the panels (8) lie in a plane comprising axes of two adjacent vertical supports (21; 210), wherein the plurality of fastening pieces (83, 83') preferably comprises first fastening pieces (83), which are configured such that the panels (8) are arranged offset to a plane formed by the two parallel cross-bars (3; 30) when they are fastened to the two parallel cross-bars (3; 30), and second fastening pieces (83') which are configured such that the panels (8) lie in a plane formed by the two parallel rungs (22, 220) when they are fastened to the two parallel rungs (22; 220).

9. Furniture kit (1; 10) according to claim 8, wherein
the covers (81) each have a rail (82) and
the covers (81) and the fastening pieces (83, 83') are configured such that the rails (82) of the two covers (81) of each of the panels (8) together accommodate one of the fastening pieces (83, 83') and the two covers (81) of each of the panels (8) are thereby fastened to one another,
and wherein preferably
the fastening pieces (83, 83') are each equipped with a bolt (832) that can be set in a locked position and an unlocked position,
the rails (82) of the covers (81) each have a bolt receptacle, and
the bolts (832) each lock the associated fastening piece (83, 83') to the rails (82) of the two covers (81) in which the fastening piece (83, 83') is accommodated when the bolt (832) is set in the locked position.

10. Furniture kit (1; 10) according to any of claims 2 to 9, wherein the spacing is in a range of from approximately 5 mm to approximately 20 mm, in a range of from 8 mm to approximately 15 mm and in particular in a range of from approximately 10 mm to approximately 13 mm.

11. Furniture kit (1; 10) according to any of the preceding claims, wherein the cross-bars (3; 30) each have a rod portion (31) which is shaped such that the latching claws (32; 320) of the cross-bars (3; 30) can be mounted thereon without tools.

12. Furniture kit (1; 10) according to any of the preceding claims, wherein the latching claws (32; 320) are each equipped with a rung receptacle (321), shaped to correspond to the rungs (22; 220) of the ground ladders (2; 20), and a slide (322), wherein the slide (322) is spring-mounted on the rung receptacle (321) and has an actuating surface.

13. Furniture kit (1; 10) according to any of the preceding claims, wherein the lower rungs (22; 220) of the ground ladders (2; 20) or the upper rungs (22; 220) of the ground ladders (2; 20) are located at a sitting-table height when the ground ladders (2; 20) are placed with their feet (24; 240) on the ground, and/or in which the upper rungs (22; 220) of the ground ladders (2; 20) are located at a standing-table height when the ground ladders (2; 20) are placed with their feet (24; 240) on the ground.

14. Furniture kit (1; 10) according to any of the preceding claims, which comprises a set of construction ladders (5; 50) which each have two vertical supports (51; 510) connected to one another via an upper rung (52; 520) and a lower rung (52; 520), wherein the vertical supports (51; 510) are configured to be plugged onto the vertical supports (51; 510) of another one of the construction ladders (5; 50) or the vertical supports (21; 210) of one of the ground ladders (2; 20).

15. Furniture kit (1; 10) according to any of the preceding claims, in which at least one of the cross-bars (3; 30) has two longitudinal rod portions which are connected to one another by cross-members, wherein the two rod portions are equipped with the latching claws (32; 320) at their longitudinal ends, so that the at least one of the cross-bars (3; 30) can be mounted simultaneously both on the upper rung (22; 220) of the first ground ladder (2; 20) and on the upper rung (22; 220) of the second ground ladder (2; 20) and also on the lower rung (22; 220) of the first of the ground ladders (2; 20) and on the lower rung (22; 220) of the second of the ground ladders (2; 20).

## Revendications

1. Meuble en kit (1 ; 10) comportant
un ensemble de panneaux de plancher (2 ; 20) qui comprennent respectivement deux supports verticaux (21 ; 210) reliés entre eux par le biais d'un barreau supérieur (22 ; 220) et d'un barreau inférieur (22 ; 220), dans lequel les deux supports verticaux (21 ; 210) sont respectivement pourvus d'un pied (23 ; 230) de préférence réglable en hauteur pour le positionnement sur un plancher,
un ensemble de traverses allongées (3 ; 30) qui sont pourvues respectivement d'une griffe d'encliquetage (220) à leurs extrémités longitudinales, ladite griffe d'encliquetage étant conçue de manière à être montée sans outil sur l'un des barreaux (22 ; 220) de l'un des panneaux de plancher (2 ; 20), et
un ensemble de contreventements allongés (4 ; 40) qui sont pourvus respectivement d'une pince (42 ; 420) à leurs extrémités longitudinales, laquelle pince est conçue de manière à être montée sur l'un des barreaux (22 ; 220) de l'un des panneaux de plancher (2 ; 20) en entourant l'un des barreaux (22 ; 220), dans lequel
les traverses (3 ; 30) et les contreventements (4 ; 40) sont conçus de sorte que l'une des traverses (3 ; 30) peut être montée sur le barreau supérieur (22 ; 220) d'un premier panneau de plancher des panneaux de plancher (2 ; 20) et sur le barreau supérieur (22 ; 220) d'un second panneau de plancher des panneaux de plancher (2 ; 20) tandis qu'un des contreventements (4 ; 40) est monté sur le barreau supérieur (22 ; 220) du premier panneau de plancher des panneaux de plancher (2 ; 20) et sur le barreau inférieur (22 ; 220) du second panneau de plancher des panneaux de plancher (2 ; 20).

2. Meuble en kit (1 ; 10) selon la revendication 1, le meuble en kit comprenant un élément formant plaque (7 ; 70, 70') qui est conçu pour reposer sur deux traverses (3 ; 30) parallèles lorsque les deux traverses (3 ; 30) parallèles sont montées sur le premier panneau de plancher des panneaux de plancher (2 ; 20) et sur le second panneau de plancher des panneaux de plancher (2 ; 20) de sorte qu'il existe respectivement un espacement entre l'élément formant plaque (7 ; 70, 70') et les barreaux (22 ; 220) du premier panneau de plancher des panneaux de plancher (2 ; 20) et du second panneau de plancher des panneaux de plancher (2 ; 20), panneaux sur lesquels les deux traverses (3 ; 30) parallèles sont montées.

3. Meuble en kit (1 ; 10) selon la revendication 2, dans lequel l'élément formant plaque (7 ; 70, 70') est dimensionné de sorte que l'espacement par rapport aux barreaux (22 ; 220) du premier panneau de plancher des panneaux de plancher (2 ; 20) et du second panneau de plancher des panneaux de plancher (2 ; 20) est mesuré respectivement de façon à ce que les griffes d'encliquetage (32 ; 320) des traverses (3 ; 30) puissent être montées sur les deux barreaux (22 ; 220) adjacents.

4. Meuble en kit (1 ; 10) selon la revendication 2 ou 3, dans lequel l'élément formant plaque (7 ; 70, 70') est pourvu d'au moins deux appuis (721) qui entourent partiellement respectivement l'une des deux traverses (3 ; 30) parallèles lorsque l'élément formant plaque (7 ; 70, 70') repose sur les deux traverses (3 ; 30) parallèles, dans lequel de préférence les au moins deux appuis (721) de l'élément formant plaque (7 ; 70, 70') présentent respectivement une première partie mâle (7212) et les traverses (3 ; 30) présentent respectivement une seconde partie mâle (311), lesquels appuis sont conçus de sorte que les première et seconde parties mâles s'imbriquent lorsque l'élément formant plaque (7 ; 70, 70') repose sur les deux traverses (3 ; 30) parallèles.

5. Meuble en kit (1 ; 10) selon l'une des revendications précédentes, le meuble en kit comprenant un ensemble d'écrans (8) qui peuvent être disposés respectivement entre deux barreaux (22 ; 220) adjacents de l'un des panneaux de plancher (2 ; 20) ou entre deux traverses (3 ; 30) parallèles verticalement adjacentes, de sorte qu'il existe un espacement par rapport aux deux barreaux (22 ; 220) adjacents ou aux deux traverses (3 ; 30) parallèles verticalement adjacentes.

6. Meuble en kit (1 ; 10) selon la revendication 5, dans lequel les écrans (8) sont dimensionnés de sorte que l'espacement par rapport aux deux barreaux (22 ; 220) adjacents des panneaux de plancher (2 ; 20) ou par rapport aux traverses (3 ; 30) parallèles verticalement adjacentes est respectivement mesuré de sorte que les griffes d'encliquetage (32 ; 320) des traverses (3 ; 30) peuvent être montées sur les traverses (3 ; 30) parallèles adjacentes verticalement aux deux barreaux (22 ; 220) adjacents.

7. Meuble en kit (1 ; 10) selon la revendication 5 ou 6, dans lequel chacun des écrans (8) comprend respectivement deux couvercles (81).

8. Meuble en kit (1 ; 10) selon l'une des revendications 5 à 7, dans lequel l'ensemble d'écrans (8) comprend une pluralité de pièces de fixation (83, 83') qui sont conçues pour fixer les écrans (8) à deux traverses (3 ; 30) parallèles ou à deux barreaux (22 ; 220) parallèles de sorte que les écrans (8) se trouvent dans un plan comprenant des axes de deux supports verticaux (21 ; 210) adjacents, dans lequel la pluralité de pièces de fixation (83, 83') comprend de préférence de premières pièces de fixation (83) qui sont conçues de sorte que les écrans (8) sont décalés par rapport à un plan formé par les deux traverses (3 ; 30) parallèles lorsqu'ils sont fixés aux deux traverses (3 ; 30) parallèles, et de secondes pièces de fixation (83') qui sont conçues de sorte que les écrans (8) se trouvent dans un plan formé par les deux barreaux (22 ; 220) parallèles lorsqu'ils sont fixés aux deux barreaux (22 ; 220) parallèles.

9. Meuble en kit (1 ; 10) selon la revendication 8, dans lequel
les couvercles (81) présentent respectivement un rail (82) et
les couvercles (81) et les pièces de fixation (83, 83') sont conçus de sorte que les rails (82) des deux couvercles (81) de chacun des écrans (8) reçoivent ensemble l'une des pièces de fixation (83, 83') et que les deux couvercles (81) de chacun des écrans (8) sont ainsi fixés l'un à l'autre,
et dans lequel de préférence
les pièces de fixation (83, 83') sont respectivement pourvues d'un verrou (832) réglable dans une position verrouillée et dans une position déverrouillée,
les rails (82) des couvercles (81) comprennent respectivement un logement de verrou, et
le verrou (832) verrouille respectivement la pièce de fixation (83, 83') correspondante avec les rails (82) des deux couvercles (81), rails dans lesquels la pièce de fixation (83, 83') est reçue lorsque le verrou (832) est réglé dans la position verrouillée.

10. Meuble en kit (1 ; 10) selon l'une des revendications 2 à 9, dans lequel l'espacement se situe dans une plage d'environ 5 mm à environ 20 mm, dans une plage de 8 mm à environ 15 mm et en particulier dans une plage d'environ 10 mm à environ 13 mm.

11. Meuble en kit (1 ; 10) selon l'une des revendications précédentes, où les traverses (3 ; 30) présentent respectivement une section de barre (31) qui est façonnée de sorte que les griffes d'encliquetage (32 ; 320) des traverses (3 ; 30) peuvent être montées sur celle-ci sans outil.

12. Meuble en kit (1 ; 10) selon l'une des revendications précédentes, où les griffes d'encliquetage (32 ; 320) sont respectivement pourvues d'un logement de barreau (321) façonné de manière correspondante aux barreaux (22 ; 220) des panneaux de plancher (2 ; 20) et d'un curseur (322), dans lequel le curseur (322) est placé élastiquement sur le logement de barreau (321) et présente une surface d'actionnement.

13. Meuble en kit (1 ; 10) selon l'une des revendications précédentes, où les barreaux inférieurs (22 ; 220) des panneaux de plancher (2 ; 20) ou les barreaux supérieurs (22 ; 220) des panneaux de plancher (2 ; 20) se trouvent à une hauteur de table d'assise lorsque les panneaux de plancher (2 ; 20) sont posés sur le plancher avec leurs pieds (24 ; 240), et/ou où les barreaux inférieurs (22 ; 220) des panneaux de plancher (2 ; 20) se trouvent à une hauteur de table haute lorsque les panneaux de plancher (2 ; 20) sont posés sur le plancher avec leurs pieds (24 ; 240).

14. Meuble en kit (1 ; 10) selon l'une des revendications précédentes, le meuble en kit comprenant un ensemble de panneaux de construction (5 ; 50) qui présentent respectivement deux supports verticaux (51 ; 510) reliés entre eux par l'intermédiaire d'un barreau supérieur (52 ; 520) et d'un barreau inférieur (52 ; 520), dans lequel les supports verticaux (51 ; 510) sont conçus pour s'emboîter sur les supports verticaux (51 ; 510) d'un autre panneau de construction des panneaux de construction (5 ; 50) ou sur les supports verticaux (21 ; 210) de l'un des panneaux de plancher (2 ; 20).

15. Meuble en kit (1 ; 10) selon l'une des revendications précédentes, où au moins l'une des traverses (3 ; 30) présente deux sections de barre allongées reliées entre elles par l'intermédiaire d'entretoises, dans lequel les deux sections de barre sont pourvues des griffes d'encliquetage (32 ; 320) à leurs extrémités longitudinales, de telle sorte que l'au moins une traverse des traverses (3 ; 30) peut être montée en même temps aussi bien sur le barreau supérieur (22 ; 220) du premier panneau de plancher des panneaux de plancher (2 ; 20) et sur le barreau supérieur (22 ; 220) du second panneau de plancher des panneaux de plancher (2 ; 20) que sur le barreau inférieur (22 ; 220) du premier panneau de plancher des panneaux de plancher (2 ; 20) et sur le barreau inférieur (22 ; 220) du second panneau de plancher des panneaux de plancher (2 ; 20).
